(19) Europäisches Patentamt

European Patent Office

Office européen des brevets

(11) EP 1 112 903 B1

## (12) EUROPEAN PATENT SPECIFICATION

(45) Date of publication and mention
of the grant of the patent:
**18.10.2006 Bulletin 2006/42**

(51) Int Cl.:
***B60T 8/00*** *(2006.01)*

(21) Application number: **99126205.6**

(22) Date of filing: **30.12.1999**

(54) **Method and apparatus for an anti-spin regulation (ASR) for a vehicle**

Verfahren und Vorrichtung zur Kraftfahrzeug -Antischlupfregelung

Méthode et appareil pour une régulation anti-patinage de véhicule

(84) Designated Contracting States:
**DE GB**

(43) Date of publication of application:
**04.07.2001 Bulletin 2001/27**

(73) Proprietor: **ROBERT BOSCH GMBH**
**70469 Stuttgart (DE)**

(72) Inventor: **Wandel, Helmut**
**71706 Markgroeningen (DE)**

(56) References cited:
**EP-A- 0 330 064          DE-A- 4 301 676**
**DE-A- 19 538 545      DE-C- 3 728 574**
**GB-A- 2 248 479**

**Description**

The present invention concerns a method as defined in the preamble of Claim 1 and an apparatus as defined in the preamble of Claim 11, i.e. a method and an apparatus for an anti-spin regulation (ASR) for a vehicle.

Generally, anti-spin regulation (ASR) is based on the detection of wheel speeds while a car is driving or starts driving. When the velocity of one or more driven wheels exceeds the speed of the car, an anti-spin regulation procedure is executed. For this purpose, the slipping wheels are braked by means of a braking system. Additionally or alternatively, the engine speed is reduced. When the slipping of the wheel(s) is reduced, the braking procedure is terminated and/or the engine speed is increased again. More detailed descriptions of anti-spin regulation systems, for example, can be found in European Patent Application EP 166 178 B1.

DE 37 28 574 C discloses a device for controlling at least one variable influencing the drive torque of a motor vehicle that uses the difference between acceleration of a driven wheel and the vehicle longitudinal acceleration as a control variable. The exceeding of a slip threshold within specific time windows after the driven wheel speed has fallen below the threshold or after increasing the drive torque is used as a check for the correct dosage of drive torque and the slip threshold itself is adjusted depending on the vehicle longitudinal acceleration.

Anti-spin regulation (ASR) principally increases the traction potential of a vehicle. However, in particular in case of anti-spin regulation systems which use brake systems, situations occur, in which the driving stability and the driving comfort are reduced due to ASR braking procedures.

It is the object of the present invention, to provide an improved method and apparatus for an anti-spin regulation (ASR) for a vehicle.

The object of the present invention is achieved by the object of method claim 1.

The object of the present invention is further achieved by the object of apparatus claim 11.

This allows to use different thresholds for the start of an anti-spin regulation and during the anti-spin regulation. Hence, the system is flexible and different aspects may be taken into account while using different thresholds.

Advantageously, the anti-spin regulation is at least partly performed by means of a braking system. A braking procedure is started by control means when the threshold for the slip of the wheel is exceeded. The termination of the braking procedure is executed by the control means when the slip of the wheel is below the threshold (Claim 2).

Resulting therefrom, by means of modification of the threshold the duration of a braking procedure is modified. Hence, for example, the slipping wheel may be prevented from over-braking and therefore the comfort and the stability of the vehicle are improved.

Within an advantageous implementation of the inventive method, the braking system is an hydraulic braking system. The pressure within the hydraulic system is determined by determination means. The modification of the threshold during the anti-spin procedure is executed by the modification means when the pressure exceeds a predefined minimum pressure (Claim 3).

A corresponding modification condition is particularly useful in case of minor wheel slips which are compensated by slight braking procedures. In such cases it may not be desired to modify the anti-spin regulation as according to the invention.

Advantageously, the engine speed, the velocity of the slipping wheel and/or the average speed of driven wheels are determined by determination means. The modification of the threshold during the anti-spin procedure is executed by the modification means when the engine speed, the velocity of the slipping wheel and/or the average speed of the driven wheels decreases.

A corresponding procedure allows to ensure that the anti-slip regulation achieves an impact on the slipping wheel before the threshold is modified. For example, in case the threshold modification results in a shortening of the duration of the braking procedure, this is of particular importance.

As according to Claim 4, the engine speed, the velocity of the slipping wheel and/or the average speed of driven wheels are continuously and/or repeatedly determined by determination means. The determined engine speed, the velocity of the slipping wheel and/or the average speed of the driven wheels are differentiated over the time. The modification of the threshold during the anti-spin procedure is executed by the modification means when the time derivation of the engine speed, the time derivation of the velocity of the slipping wheel and/or the time derivation of the average speed of the driven wheels is negative. A corresponding approach results in an easy and inexpensive way of determination of the decrease of the engine speed, the velocity of the slipping wheel and/or the average speed of the driven wheels.

Advantageously, the threshold is enlarged during the anti-spin regulation procedure (Claim 5).

By doing so, the braking time is reduced and therefore the vehicle is prevented from over-braking due to a too fast reduction of the velocity of the slipping wheel.

Advantageously, an offset is added to the threshold during the anti-spin regulation procedure (Claim 6).

This particularly allows an easy implementation of the object of claim 6.

Within an advantageous implementation of the invention, the offset is calculated by means of inversion of the negative value of the time derivation of the velocity of the slipping wheel and multiplication of the obtained result with a predefined factor (Claim 7) .

This ensures that the modification of the threshold is related to the results obtained during the anti-spin regulation and therefore ensures that the anti-spin regulation is executed to a sufficient degree.

As according to Claim 8, the offset is calculated by means of inversion of the negative value of the time derivation of the engine speed and multiplication of the obtained result by a predefined factor.

The use of the time derivation of the engine speed has the advantage of higher precision compared to the use of the time derivation of the velocity of the slipping wheel. This is because the engine speed can be determined with less disturbances. Moreover, the time derivation of the engine speed turns negative earlier than the time derivation of the velocity of the slipping wheel.

Within a further advantageous implementation of the invention, the offset is calculated by means of inversion of the negative value of the time derivation of the average speed of the driven wheels and multiplication of the obtained result by a predefined factor (Claim 9).

This allows a relatively high precision in particular in case the data corresponding to the engine speed are not available for the calculation of the offset.

Advantageously, the offset is limited by a predefined maximum and/or a predefined minimum value (Claim 10).

This again ensures, that the anti-spin regulation is executed to a sufficient degree.

The invention will be explained below in more detail with reference to exemplary embodiments, referring to the figures in which:

FIG.1 shows a depiction of graphs illustrating an anti-spin regulation as according to the invention;
FIG.2 shows a depiction of graphs illustrating an anti-spin regulation which can be modified as according to the invention; and
FIG.3 shows a depiction of an exemplary environment in which the present invention is implemented.

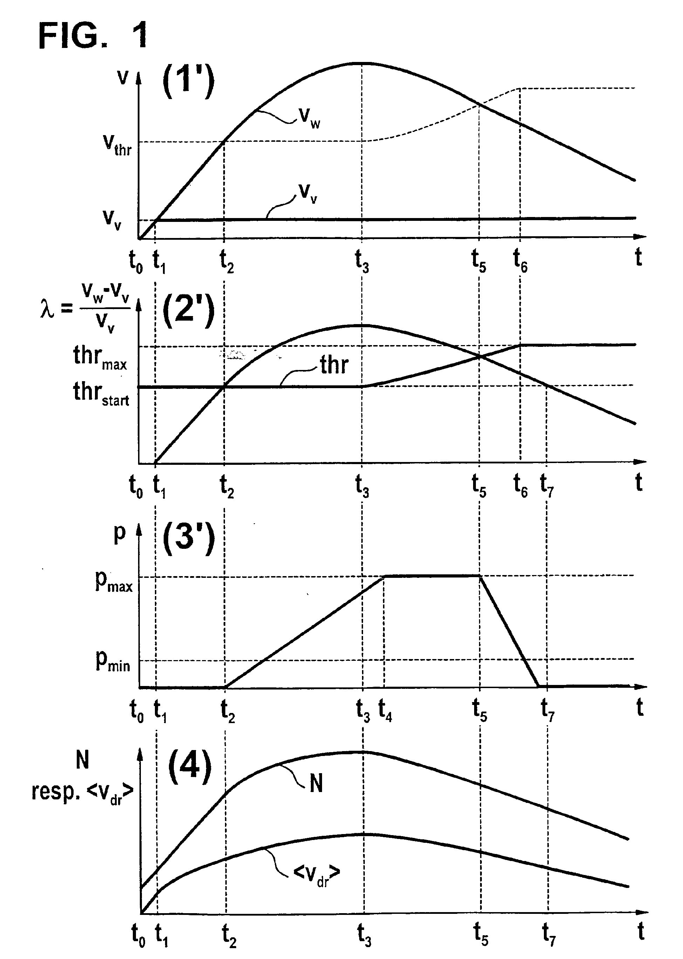

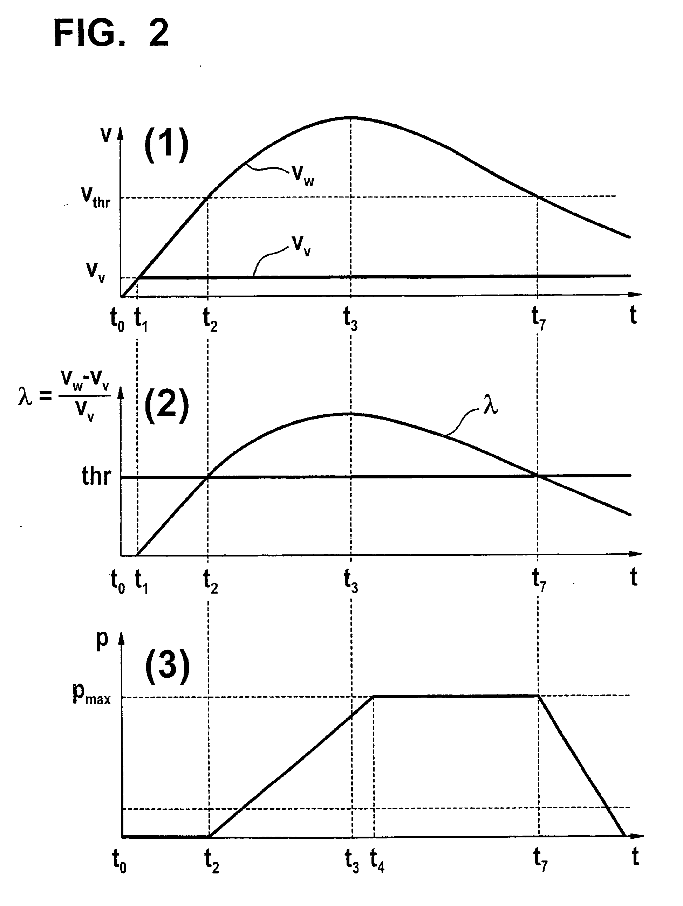

As mentioned above, an anti-spin regulation as according to the invention is illustrated in FIG.1. However, in order to allow a better understanding thereof, firstly, an anti-spin regulation which does not use the invention, but which can be modified as according to the invention, is described while referring to FIG.2. But then, it is described, how said anti-spin regulation is modified in accordance with the invention while referring to FIG. 1.

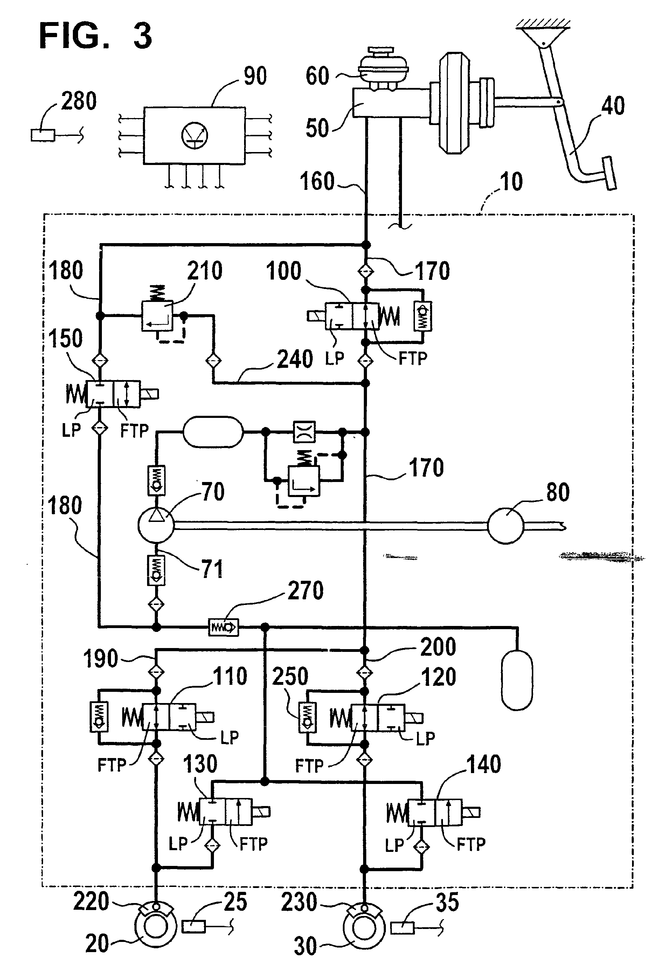

In FIG. 2 as an example, an anti-spin regulation which is executed by means of an hydraulic braking system (for example as described below while referring to FIG. 3) is illustrated. However, it has to be understood, that then anti-spin regulation might be executed by any other braking system as well as additionally or alternatively by any engine control system without any effect on the invention itself.

FIG.2 comprises three graphs (1), (2) and (3). In each graph (1), (2) and (3) quantities are depicted as functions of the time during the same time slot. Hence, the base axis of each graph (1), (2) and (3) is a time axis t and the time axes t of the three graphs (1), (2) and (3) are equal one to another.

Moreover, within the first graph (1), the remaining axis is a velocity axis v and the velocity of a vehicle $v_v$ as well as the velocity of a slipping wheel $v_w$ are depicted. Within the second graph (2), the remaining axis is a slip axis $\lambda = (v_w - v_v)/v_v$ and the slip $\lambda$ of a wheel of the car is depicted (the definition of the slip $\lambda$ is discussed in detail below). Finally, within the third graph (3) the remaining axis is a pressure axis p and the pressure p of a pressurized medium within the hydraulic braking system is depicted.

In more detail and as shown in graph (1), the vehicle is accelerated and hence the velocity of the vehicle $v_v$ is increased between a starting time $t_0$ and a first time $t_1$ (thereby, the velocity of the vehicle may be measured by means of any suitable method, for example by known means such as measuring the velocity of the non-driven wheels only, averaging velocities of several wheels etc.). Then, for simplicity, the velocity of the vehicle $v_v$ remains constant until a seventh time $t_7$. However, any changes of the velocity of the vehicle v might occur during this period of time $t_1$-$t_7$ without any effect on the invention.

Whereas the velocity of the vehicle $v_v$ remains constant after the first time $t_1$, the velocity of a slipping wheel $v_w$ is further increased as can be seen in graph (1). Hereby, again for simplicity, the case of just one slipping wheel out of two or for driven wheels is considered. However, the invention itself is neither affected by the number of slipping wheels nor by the number of driven wheels and therefore by the matter of fact if the vehicle has a front wheel drive, a rear wheel drive or an all-wheel drive.

Within the example considered and as indicated in graph (2), the slip $\lambda$ of the slipping wheel is described as:

$$\lambda = \frac{v_w - v_v}{v_v}$$

wherein $v_w$ is the velocity of the slipping wheel and $v_v$ is the velocity of the vehicle. Hence, the slip $\lambda$ is the relative difference of the velocity of the slipping wheel $v_w$ and the velocity of the vehicle $v_v$. However, any other suitable description of the slip $\lambda$ may be used with the invention (for example, the absolute instead of the relative velocity difference $\Delta v_{w,v}$ may be used).

At a second time $t_2$, the slip $\lambda$ of the slipping wheel exceeds a predefined slip threshold *thr*, as shown in graph (2). For simplicity, the slip threshold *thr* is assumed to be constant. However, even before the anti-spin regulation takes place and without any regards to the actual anti-spin regulation, the predefined slip threshold *thr* might be defined as any suitable function over the time without any effect on the invention. For example, in case the slip $\lambda$ is defined as the absolute instead of the relative velocity difference $\Delta v_{w,v}$, the slip threshold *thr* might depend on the velocity of the vehicle $v_v$ and therefore change over the time.

Since the slip threshold *thr* as well as the velocity of the vehicle $v_v$ (after the first time $t_1$) are assumed to be constant, there is a constant velocity $v_{thr}$ which corresponds to the slip threshold thr and which is depicted as threshold velocity $v_{thr}$ in graph (1). This threshold velocity $v_{thr}$ is calculated as:

$$v_{thr} = v_v + thr * v_v$$

By way of example, as soon as the slip $\lambda$ exceeds the slip threshold *thr* and hence as soon as the velocity of the slipping wheel $v_w$ exceeds the threshold velocity $v_{thr}$ an anti-slip regulation procedure is started. However, there might be any suitable delay without any effect on the invention. For example, a corresponding delay might be desired in case an anti-spin regulation procedure should only be executed in case the slip threshold *thr* is exceeded for at least a minimum amount of time.

During the anti-spin regulation, within the example considered, pressure p is built up in an hydraulic braking system and therefore braking force is applied to the slipping wheel. Resulting therefrom, firstly, the acceleration of the slipping wheel is reduced between the second time $t_2$ and a third time $t_3$. Then, at the third time $t_3$, the acceleration of the slipping wheel is stopped. In the following time, a deceleration takes place and hence the velocity of the slipping wheel $v_w$ is reduced.

At the same time or earlier or later (at a fourth time $t_4$ as depicted in graph (3)), when the acceleration of the slipping wheel is stopped, a maximum pressure $p_{max}$ is achieved. Within the example considered, said maximum pressure $p_{max}$ is held constant during a following period of time. However, any other suitable function of the pressure p over this period of time (as well as during the pressure building period) may be used.

Within the example considered, as soon as the slip $\lambda$ turns below the slip threshold *thr* at a seventh time $t_7$ and therefore as soon as the velocity of the slipping wheel $v_w$ turns below the threshold velocity $v_{thr}$ again, the termination of the anti-spin regulation is executed by control means (as described below while referring to FIG.3) and therefore the pressure p within the hydraulic brake system is reduced to zero during the following time. However, there might be any suitable delay as well. For example, the termination might only be executed in case the velocity of the slipping wheel $v_w$ remains below the threshold velocity $v_{thr}$ for a minimum amount of time.

In FIG.1 an example is shown, how the anti-spin regulation described above is modified as according to the invention. Within FIG.1, the first, second and third graphs (1), (2) and (3) are replaced with corresponding modified graphs (1'), (2') and (3'). Moreover, a fourth graph (4) is depicted, which has the same time base as the remaining graphs (1'), (2') and (3'), but has an engine speed resp. average-speed-of-driven-wheels axis N resp.$<V_{dr}>$ as second axis and shows the engine speed N as well as the average speed of the driven wheels $<v_{dr}>$ as functions of the time.

Within the time slot between the starting time $t_0$ and the third time $t_3$, the anti-spin regulation, and therefore the graphs (1'), (2') and (3') in FIG.1, are equal to what is described above resp. equal to the graphs (1), (2) and (3) out of FIG.2. But at the third time $t_3$, when the velocity of the slipping wheel $v_w$ has reached its maximum, differences occur as according to the invention.

The first condition for this may be (but does not have to be), that the pressure p exceeds a certain minimum value $p_{min}$ as indicated by a dashed line in graph (3'). Hence, in case the termination of the anti-spin regulation is executed before the pressure p reaches the minimum pressure $p_{min}$, no modifications are applied to the anti-spin regulation as illustrated in FIG.2. The minimum pressure $p_{min}$ may be equal to or smaller as the maximum pressure $p_{max}$. The pressure p itself may be measured by measuring means or estimated from the pressure building time (i.e. the time during which a pressure pump within the hydraulic system runs).

The requirement of a minimum pressure $p_{min}$ as a modification condition is useful in case of minor wheel slips which are compensated by slight braking procedures. For example, in case of an exemplary front wheel drive, a minimum pressure $P_{min}$ of 15 bar and, in case of an exemplary rear wheel drive, a minimum pressure $p_{min}$ of 40 bar can be used in order to avoid unnecessary modifications.

However, in the example illustrated in FIG.1, the minimum pressure $p_{min}$ has been exceeded between the

second time $t_2$ and the third time $t_3$, as can be seen in graph (3'). Hence, modifications are applied to the anti-spin regulation as according to the invention and as will be described below.

Due to a further condition for the modification onset, the development of the engine speed N, the average speed of the driven wheels $<v_{dr}>$ and/or the velocity of the slipping wheel $v_w$ are taken into account: At said third time $t_3$, the engine speed N as well as the average speed of the driven wheels $<v_{dr}>$ have reached their maximum within the time slot $t_0$-$t_7$. Moreover, the velocity of the slipping wheel $v_w$ has also reached its maximum at the third time $t_3$ (however, this just coincides with the maximum of the velocity of the slipping wheel $v_w$, since the velocity of the vehicle $v_v$ is assumed to be constant during the time slot $t_1$-$t_7$ and since there is only one slipping wheel; hence, the velocity of a slipping wheel $v_w$ might reach its maximum before or after the engine speed N and/or the average speed of the driven wheels $<v_{dr}>$ reach their corresponding maxima). From this it is concluded, that the aim of the anti-spin regulation can be reasonably achieved, when the remaining part of the anti-spin regulation is modified as according to the invention. Hence, the further modification condition requires, that one or more of the aforementioned maxima are reached or passed over.

In order to fulfill said second modification condition, the engine speed N and/or the individual wheel speeds are measured by measuring means (as described below while referring to FIG.3) at least after the minimum pressure $p_{min}$ is exceeded. From this, in case all the individual wheel speeds of driven wheels are measured, the average speed of the driven wheels $<v_{dr}>$ is for example calculated as:

$$< v_{dr} >= \frac{v_{rear,l} + v_{rear,r}}{2}$$

wherein $v_{rear,l}$ is the velocity of the left rear wheel and $V_{rear,r}$ is the velocity of the right rear wheel in case of a rear wheel drive (in case of front wheel drive or of a all-wheel drive the calculation is done in a corresponding way).

Moreover, in order to determine whether the engine speed N, the average speed of the driven wheels $<v_{dr}>$ and/or the velocity of the slipping wheel $v_w$ have reached or passed over their corresponding maxima, the time derivations of the engine speed N, the average speed of the driven wheels $<v_{dr}>$ and/or the velocity of the slipping wheel $v_w$ are repeatedly calculated. In order to do so, the corresponding values are repeatedly measured and the foregoing value is subtracted from each current value. Hence, for example:

$$\frac{dN}{dt} \approx \frac{\Delta N_{(n,n-1)}}{\Delta t_{(n,n-1)}} = \frac{\{N(t_n) - N(t_{n-1})\}}{\Delta t_{(n,n-1)}}$$

which best holds for:

$$\Delta t_{(n,n-1)} \rightarrow 0$$

For example, in particular while exemplarily calculating $d<v_{dr}>$, the time interval should not be above 300-400 ms in order to reduce negative effects due to measuring disturbances.

As soon as the calculated time derivation (s) is resp, are (equal to or) below zero, in principle the corresponding maximum is passed over. However, due to measuring inaccuracies and/or disturbances the values may oscillate around zero for some time. Hence, it might be useful to require a plurality of negative values of the calculated time derivations before the conclusion of having passed over the maximum is made. For this reason, the onset of the modification may be delayed and therefore only take place some time after the third time $t_3$.

Then, the modification itself in this example is done by means of adding an offset $\Delta_{thr}$ to the slip threshold *thr*. Resulting therefrom, the slip threshold *thr* is increased and the duration of the anti-spin regulation is decreased, since the termination thereof is executed as soon as (or sooner or later as) the slip $\lambda$ is below the modified slip threshold *thr*. The calculation of the offset $\Delta_{thr}$ depends on whether the engine speed N or the average speed of the driven wheels $<v_{dr}>$ or the velocity of the slipping wheel $v_w$ are used for the control of the modification. Hence, within the example considered, the offset $\Delta_{thr}$ is either calculated as:

$$\Delta_{thr} = -(dN/dt * F_N)$$

or as:

$$\Delta_{thr} = -(d<v_{dr}>/dt * F_{<v_{dr}>})$$

or as:

$$\Delta_{thr} = -(dv_w/dt * F_{v_w})$$

.

Within these calculations the factors $F_N$, $F_{<vdr>}$ or $F_{vw}$ may be constant or depend on further parameters such as different brake system modes etc. As a result, the offsets start with small values close to zero and are increased in accordance with the aforementioned time derivations. Furthermore, the offset $\Delta_{thr}$ is limited by a predefined maximum value. Hence, as soon as the maximum value of the offset and therefore the maximum value of the maximum slip threshold $thr_{max}$ (the starting threshold $thr_{start}$ as increased by the maximum offset) is achieved, the offset remains constant for the remaining procedure (or, if required is decreased again). This allows to limit the inventive method to a desired range. For example, in case of an exemplarily front wheel drive factors $F_N$= 15 resp. $F_{<vdr>}$= 1,5 or 3,0 (depending on the brake system mode) may be used and in case of a rear wheel drive factors $F_N$= 400 or 600 (depending on the brake system mode) resp. $F_{<vdr>}$= 1,5 or 3,0 (depending on the brake system mode); moreover, the maximum offset $\Delta thr_{max}$, may be defined as 15 km/h / $v_w$.

As a result, as according to the invention the pressure p is reduced earlier than without the invention. For this reason, the driven wheels are prevented from a too fast reduction of the velocity. The car is not over-braked and therefore the comfort is improved.

Moreover, it is possible to have more sensitive initial slip thresholds $thr$ than without the inventive method. This allows to regulate even small wheel slips without reducing the driving comfort due to over-braking caused by anti-spin regulations.

The invention is particularly advantageous in case of an anti-slip regulation with a large share of braking regulation and a minor (or no) share of engine regulation. However, the invention does also improve a corresponding engine regulation system.

Finally, as mentioned above, in FIG.3 an exemplary environment is described, in which the invention is implemented. In more detail, FIG. 3 shows a hydraulic system which is eligible for use with the inventive method and implemented as a first brake circuit 10 of a hydraulic braking system within a car. By way of example, the first brake circuit 10 is used for braking the right rear wheel 20 and the left rear wheel 30 of a car which has a rear wheel drive (hence, there is a second brake circuit for the remaining two wheels required which, for simplicity, is not shown in FIG. 3). A corresponding hydraulic brake system is referred to as "TT-brake circuit partition". However, it is to be understood, that any other hydraulic brake system (as well as any other wheel drive such as an all-wheel drive or a front wheel drive and any other hydraulic system in general) may be used with the inventive method. This in particular holds for a so-called "X-brake circuit partition", in which a separate brake circuit is used for one rear wheel and one front wheel, in a car which for example has an all-wheel drive. Moreover, the inventive method also may be used within a "X-brake circuit partition" in a car which has a rear or a front wheel drive.

The first brake circuit 10 has two independent pressure sources. Firstly, the car driver can produce pressure by pushing a brake pedal 40 which is connected to a main brake cylinder 50 with a pressurized medium reservoir 60. Secondly, there is a high pressure pump 70, which is driven by an electrical driving motor 80 and which is controlled by a control unit 90. Hence, the first brake circuit 10 is eligible for a simple pedal driven braking procedure as well as for use as a anti-lock braking system (ABS) or as an anti-spin regulation (ASR) system both of which require the implementation of the motor driven pressure pump 70 in order to build up pressures independently of what any car driver is doing.

In more detail, anti-lock braking (ABS) is performed in principle by means of detecting wheel speeds during a braking procedure and frequently opening and closing individual wheel brakes 220, 230 in case a wheel speed is reduced to zero but the total speed of the car is not. On the other hand, anti-spin regulation (ASR) is performed in principle by means of detecting wheel speeds during a starting or driving procedure and frequently closing and opening individual wheel brakes 220, 230 in case the speed of a driven wheel exceeds the speed of other wheels and/or the total speed of the car. Hence, there are wheel speed sensors 25, 35 implemented, which are eligible to detect the speed of each individual wheel 20, 30.

Furthermore, as according to the invention, the wheel speed sensors 25 or 35 are used to monitor wheel speeds in general and in particular during an anti-spin regulation. The monitoring results are provided to the control unit 90. Within the control unit 90 the average speed of the driven wheels <$V_{dr}$> is determined. Furthermore, the engine speed N is detected by means of an engine speed sensor 280. The corresponding measuring results are provided to the control unit 90. Additionally, the pressure within the hydraulic system is either detected by pressure sensors (not shown) or estimated by the control unit 90 from the pressure building time (i.e. the time during which a pressure is built up in a predefined way). Moreover, the control unit is eligible to control the hydraulic braking system as according to the invention due to a corresponding soft- and/or hardware implementation.

Moreover, the first brake circuit 10 is brancned end comprises within its branches six 2/2 port directional control valves 100, 110, 120, 130, 140 and 150 (shortly: 2/2 valves 100, 110, 120, 130, 140 and 150). Each of these 2/2 valves 100, 110, 120, 130, 140, 150 can be switched between a bidirectional or one-directional in case of 2/2 valves 130 and 140) flow-through position FTP and a locking position LP. Thereby, each switch is implemented by means of a spring-actuated first position (i.e. either the flow-through position FTP or the locking position LP) and an electromagnetically-actuated second position (i.e. either the locking position LP or the flow-through position FTP), as indicated in FIG. 3. Hence, each switch (and therefore each 2/2 valve 100, 110, 120, 130, 140, 150) is controlled by means of charging or discharging a corresponding electromagnetic magnet and said charging or discharging procedures are controlled by the contrcl unit 90. As a result, the first brake circuit 10 can be modified by the control unit 90 by means of opening and closing any of the 2/2 valves 100, 110, 120, 130, 140 and/or 150 and therefore opening and closing the individual branches of the first brake circuit 10. Hence, the first brake circuit can be set into several configurations which are required to perform simple pedal driven braking, ABS braking and/or ASR procedures.

Within FIG. 3, the first brake circuit is shown in a configuration eligible for simple pedal driven braking. In this configuration, pushing the pedal 40 results in a pressure production within the main brake cylinder 50. The pressure is transported within a pressurized medium along a root line 160, a first branch 170 (through the first 2/2 valve 100, in the following referred to as shut-off valve 100, which is in its flow-through position FTP) and a third and a fourth branch 190, 200 (through the second respectively third 2/2 valves 110 resp. 120, in the following referred to as first resp. second inlet 2/2 valves 110, 120, which are in their flow-through positions FTP). From this, a first and a second wheel brake 220, 230 are activated.

Within this constellation, switching on the high pressure pump 70 by means of the electrical driving motor 80 (and controlled by the control unit 90) would basically have no effect on the braking system. This is because the 2/2 valve 150 within the second branch 180 is in its Locking position LP. Hence, there is no pressurized medium supplied into the inlet 71 of the high pressure pump 70 which otherwise would be available out of the pressurized medium reservoir 60 through the second branch 180.

On the.other hand, by means of switching the 2/2 valve 150 into its flow-through position FTP and switching the shut-off 2/2 valve 100 into its locking position LP the high pressure pump 70 instead of the brake pedal 40 might produce pressure on the wheel brakes 220, 230. Thereby, the maximum pressure is limited by means of a pressure control valve 210 which is adjusted to any desired maximum pressure and which would open an overflow line 240 in case a corresponding threshold is exceeded.

As a result, by means of opening and closing the 2/2 valves in an eligible manner any anti-spin regulation (ASR) can be performed by the system as according to the state of the art. While doing so, the wheel speed sensors 25 or 35 can be used to monitor each non-braked wheel. The control unit 90 can be used to determine whether the non-braked wheel tends 20 or 30 to slip or not while using the monitoring results. Then, whenever a slipping trend occurs, the control unit 90 can cause the system to brake the non-braked wheel 20 or 30 as described above.

It has to be understood, that any other eligible braking system can be used with the invention. Moreover, instead of the control unit 90 other components may be used in order to determine whether the non-braked wheel tends 20 or 30 to slip or not while using the monitoring results. Furthermore, additional wheel speed sensors may be used in order to detect slipping trends (for example, the additional wheel speed sensors might be more sensitive than the ordinary available wheel speed sensors 25 and 35).

**Claims**

1. Method for an anti-spin regulation (ASR) for a vehicle, wherein a) an anti-spin regulation is executed by regulation means (90, 10) when a threshold (*thr*) for the slip ($\lambda$) of a wheel (20, 30) is exceeded, and b) the threshold (*thr*) is modified by modification means (90) while the anti-spin regulation procedure is executed, **characterized in that** c) the engine speed (N), the velocity of the slipping wheel ($v_w$) and/or the average speed of driven wheels (<$v_{dr}$>, 20, 30) are determined by determination means (25, 35, 90, 280), and d) the modification of the threshold (thr) during the anti-spin procedure is executed by the modification means (90) when the engine speed (N), the velocity of the slipping wheel ($v_w$) and/or the average speed of the driven wheels ($<v_{dr}>$) decreases.

2. Method as a according to claim 1, **characterized in that** a) the anti-spin regulation is at least partly performed by means of a braking system (10); b) a braking procedure is started by control means (90) when the threshold (thr) for the slip ($\lambda$) of the wheel (20, 30) is exceeded; and c) the termination of the braking procedure is executed by the control means (90) when the slip ($\lambda$) of the wheel (20, 30) is below the threshold (*thr*).

3. Method as according to one of the foregoing claims, **characterized in that** a) the braking system (10) is an hydraulic braking system; b) the pressure (p) within the hydraulic system (10) is determined by determination means (90); and c) the modification of the threshold (*thr*) during the anti-spin procedure is executed by the modification means (90) when the pressure (p) exceeds a predefined minimum pressure ($p_{min}$).

4. Method as according to one of the foregoing claims, **characterized in that** a) the engine speed (N), the velocity of the slipping wheel ($v_w$) and/or the average speed of driven wheels ($<v_{dr}>$, 20, 30) are continuously and/or repeatedly determined by determination means (25, 35, 90, 280); b) the determined engine speed (N), the velocity of the slipping wheel ($v_w$) and/or the average speed of the driven wheels ($<v_{dr}>$) are differentiated over the time; and c) the modification of the threshold (thr) during the anti-spin procedure is executed by the modification means (90) when the time derivation of the engine speed (N), the time derivation of the velocity of the slipping wheel ($v_w$) and/or the time derivation of the average speed of the driven wheels ($<v_{dr}>$) is negative.

5. Method as according to one of the foregoing claims, **characterized in that** the threshold (thr) is enlarged during the anti-spin regulation procedure.

6. Method as according to one of the foregoing claims, **characterized in that** an offset ($\Delta_{thr}$) is added to the threshold (thr) during the anti-spin regulation procedure.

7. Method as according to claim 6, **characterized in that** the offset ($\Delta_{thr}$) is calculated by means of a) inversion of the negative value of the time derivation of the velocity of the slipping wheel ($v_w$, 20,30); and b) multiplication of the obtained result with a predefined factor ($F_{vw}$).

8. Method as according to one of the claims 6 to 7, **characterized in that** the offset ($\Delta_{thr}$) is calculated by means of a) inversion of the negative value of the time derivation of the engine speed (N); and b) multiplication of the obtained result with a predefined factor ($F_N$).

9. Method as according to one of the claims 6 to 8, **characterized in that** the offset ($\Delta_{thr}$) is calculated by means of a) inversion of the negative value of the time derivation of the average speed of the driven wheels ($<v_{dr}>$); and b) multiplication of the obtained result by a predefined factor ($F<v_{dr}>$).

10. Method as according to one of the claims 6 to 9, **characterized in that** the offset ($\Delta_{thr}$) is limited by a predefined maximum and/or a predefined minimum value ($thr_{max}$).

11. Apparatus for an anti-spin regulation (ASR) for a vehicle, in particular eligible for use with the method as according to one of the foregoing claims, wherein a) an anti-spin regulation is executable by regulation means (90, 10) when a threshold (thr) for the slip ($\lambda$) of a wheel (20, 30) is exceeded; and b) the threshold (thr) is changeable by modification means (90) during the anti-spin regulation procedure, **characterized in that** the apparatus is configured to c) determine the engine speed (N), the velocity of the slipping wheel ($v_w$) and/or the average speed of driven wheels ($<v_{dr}>$, 20, 30) by determination means (25, 35, 90, 280), and d) execute the modification of the threshold (thr) during the anti-spin procedure by the modification means (90) when the engine speed (N), the velocity of the slipping wheel ($v_w$) and/or the average speed of the driven wheels ($<v_{dr}>$) decreases.

**Patentansprüche**

1. Verfahren für eine Antischlupfregelung (ASR) für ein Fahrzeug, wobei a) eine Antischlupfregelung durch Regelungsmittel (90, 10) ausgeführt wird, wenn ein Schwellenwert (thr) für den Schlupf ($\lambda$) eines Rades (20, 30) überschritten wird, und b) der Schwellenwert (thr) durch Modifikationsmittel (90) modifiziert wird, während der Antischlupfregelungsvorgang ausgeführt wird, **dadurch gekennzeichnet, dass** c) die Motordrehzahl (N), die Geschwindigkeit ($v_w$) des durchdrehenden Rades und/oder die Durchschnittsgeschwindigkeit der angetriebenen Räder ($<v_{dr}>$, 20, 30) durch Bestimmungsmittel (25, 35, 90, 280) bestimmt werden und d) die Modifikation des Schwellenwertes (thr) während des Antischlupfregelungsvorgangs durch die Modifikationsmittel (90) ausgeführt wird, wenn die Motordrehzahl (N), die Geschwindigkeit ($v_w$) des durchdrehenden Rades und/oder die Durchschnittsgeschwindigkeit ($<v_{dr}>$) der angetriebenen Räder abnehmen.

2. Verfahren nach Anspruch 1, **dadurch gekennzeichnet, dass** a) die Antischlupfregelung wenigstens teilweise mittels eines Bremssystems (10) durchgeführt wird; b) ein Bremsvorgang durch Regelungsmittel (90) begonnen wird, wenn der Schwellenwert (thr) für den Schlupf ($\lambda$) des Rades (20, 30) überschritten wird; und c) die Beendigung des Bremsvorgangs durch die Regelungsmittel (90) ausgeführt wird, wenn der Schlupf ($\lambda$) des Rades (20, 30) unterhalb des Schwellenwertes (thr) liegt.

3. Verfahren nach einem der vorhergehenden Ansprüche, **dadurch gekennzeichnet, dass** a) das Bremssystem (10) ein hydraulisches Bremssystem ist; b) der Druck (p) innerhalb des hydraulischen Systems (10) durch Bestimmungsmittel (90) bestimmt wird; und c) die Modifikation des Schwellenwertes (thr) während des Antischlupfvorgangs durch die Modifikationsmittel (90) ausgeführt wird, wenn der Druck (p) einen vorher festgelegten Minimaldruck ($p_{min}$) überschreitet.

4. Verfahren nach einem der vorhergehenden Ansprüche, **dadurch gekennzeichnet, dass** a) die Motordrehzahl (N), die Geschwindigkeit ($v_w$) des durchdrehenden Rades und/oder die Durchschnittsgeschwindigkeit der angetriebenen Räder, ($<v_{dr}>$, 20, 30) fortlaufend und/oder wiederholt durch Bestimmungsmittel (25, 35, 90, 280) bestimmt werden; b) die bestimmte Motordrehzahl (N), die Geschwindigkeit ($v_w$) des durchdrehenden Rades und/oder die Durchschnittsgeschwindigkeit ($<v_{dr}>$) der angetriebenen Räder über die Zeit differenziert werden; und c) die Modifikation des Schwellenwertes (thr) während des Antischlupfvorgangs durch die Modifikationsmittel (90) ausgeführt wird, wenn die Zeitableitung der Motordrehzahl (N), die Zeitableitung der Geschwindigkeit ($v_w$) des durchdrehenden Rades und/oder die Zeitableitung der Durchschnittsgeschwindigkeit ($<v_{dr}>$) der angetriebenen Räder negativ sind.

5. Verfahren nach einem der vorhergehenden Ansprüche, **dadurch gekennzeichnet, dass** der Schwellenwert (thr) während des Antischlupfregelungsvorgangs vergrößert wird.

6. Verfahren nach einem der vorhergehenden Ansprüche, **dadurch gekennzeichnet, dass** zu dem Schwellenwert (thr) während des Antischlupfregelungsvorgangs ein Ausgleich ($\Delta_{thr}$) addiert wird.

7. Verfahren nach Anspruch 6, **dadurch gekennzeichnet, dass** der Ausgleich ($\Delta_{thr}$) mittels a) Umkehrung des negativen Wertes der Zeitableitung der Geschwindigkeit des durchdrehenden Rades ($v_w$, 20, 30); und b) Multiplikation des erhaltenen Ergebnisses mit einem vorher festgelegten Faktor ($F_{vw}$) berechnet wird.

8. Verfahren nach einem der Ansprüche 6 bis 7, **dadurch gekennzeichnet, dass** der Ausgleich ($\Delta_{thr}$) mittels a) Umkehrung des negativen Wertes der Zeitableitung der Motordrehzahl (N); und b) Multiplikation des erhaltenen Ergebnisses mit einem vorher festgelegten Faktor ($F_N$) berechnet wird.

9. Verfahren nach einem der Ansprüche 6 bis 8, **dadurch gekennzeichnet, dass** der Ausgleich ($\Delta_{thr}$) mittels a) Umkehrung des negativen Wertes der Zeitableitung der Durchschnittsgeschwindigkeit ($<v_{dr}>$) der angetriebenen Räder; und b) Multiplikation des erhaltenen Ergebnisses mit einem vorher festgelegten Faktor ($F<v_{dr}>$) berechnet wird.

10. Verfahren nach einem der Ansprüche 6 bis 9, **dadurch gekennzeichnet, dass** der Ausgleich ($\Delta_{thr}$) durch einen vorher festgelegten Maximal- und/oder einen vorher festgelegten Minimalwert ($thr_{max}$) begrenzt wird.

11. Vorrichtung für eine Antischlupfregelung (ASR) für ein Fahrzeug, insbesondere geeignet zur Verwendung mit einem Verfahren nach einem der vorhergehenden Ansprüche, wobei a) eine Antischlupfregelung durch Regelungsmittel (90, 10) ausgeführt werden kann, wenn ein Schwellenwert (thr) für den Schlupf ($\lambda$) eines Rades (20, 30) überschritten wird, und b) der Schwellenwert (thr) durch Modifikationsmittel (90) während des Antischlupfregelungsvorgangs verändert werden kann, **dadurch gekennzeichnet, dass** die Vorrichtung konfiguriert ist, um c) die Motordrehzahl (N), die Geschwindigkeit ($v_w$) des durchdrehenden Rades und/oder die Durchschnittsgeschwindigkeit der angetriebenen Räder ($<v_{dr}>$, 20, 30) durch Bestimmungsmittel (25, 35, 90, 280) zu bestimmen und d) die Modifikation des Schwellenwertes (thr) während des Antischlupfregelungsvorgangs durch die Modifikationsmittel (90) auszuführen, wenn die Motordrehzahl (N), die Geschwindigkeit (v$_w$) des durchdrehenden Rades und/oder die Durchschnittsgeschwindigkeit (<v$_{dr}$>) der angetriebenen Räder abnehmen.

**Revendications**

1. Procédé de régulation anti-patinage (ASR) d'un véhicule, selon lequel

    (a) une régulation anti-patinage est exécutée par des moyens de régulation (90, 10) quand un seuil (thr) pour le patinage (λ) d'une roue (20, 30) est dépassé, et
    (b) le seuil (thr) est modifié par des moyens de modification (90) pendant que la procédure de régulation anti-patinage est exécutée,
    **caractérisé en ce que**
    (c) le régime du moteur (N), la vitesse de la roue en cours de patinage (v$_w$) et/ou la vitesse moyenne des roues motrices (<v$_{dr}$>, 20, 30) sont déterminées par des moyens de détermination (25, 35, 90, 280), et
    (d) la modification du seuil (thr) pendant la procédure d'anti-patinage est exécutée par des moyens de modification (90) quand le régime du moteur (N), la vitesse de la roue en cours de patinage (v$_w$) et/ou la vitesse moyenne des roues motrices (<v$_{dr}$>) diminuent.

2. Procédé selon la revendication 1,
    **caractérisé en ce que**

    (a) la régulation anti-patinage est au moins en partie effectuée au moyen d'un système de freinage (10),
    (b) une procédure de freinage est initiée par des moyens de commande (90) quand le seuil (thr) pour le patinage (λ) de la roue (20, 30) est dépassé, et
    (c) l'achèvement de la procédure de freinage est exécuté par les moyens de commande (90) quand le patinage (λ) de la roue (20, 30) est au-dessous du seuil (thr).

3. Procédé selon l'une quelconque des revendications précédentes,
    **caractérisé en ce que**

    (a) le système de freinage (10) est un système de freinage hydraulique,
    (b) la pression (p) dans le système hydraulique (10) est déterminée par des moyens de détermination (90), et
    (c) la modification du seuil (thr) pendant la procédure d'anti-patinage est exécutée par les moyens de modification (90) quand la pression (p) dépasse une pression minimum prédéfinie (pmin).

4. Procédé selon l'une quelconque des revendications précédentes,
    **caractérisé en ce que**

    (a) le régime du moteur (N), la vitesse de la roue en cours de patinage (v$_w$) et/ou la vitesse moyenne des roues motrices (<v$_{dr}$>, 20, 30) sont déterminées de façon continue et/ou de façon répétée par des moyens de détermination (25, 35, 90, 280),
    (b) le régime du moteur déterminé (N), la vitesse de la roue en cours de patinage (v$_w$) et/ou la vitesse moyenne des roues motrices (<v$_{dr}$>) sont différenciées au cours du temps, et
    (c) la modification du seuil (thr) pendant la procédure d'anti-patinage par les moyens de modification (90) quand la dérivation temporelle du régime du moteur (N), la dérivation temporelle de la vitesse de la roue en cours de patinage (v$_w$) et/ou la dérivation temporelle de la vitesse moyenne des roues motrices (<v$_{dr}$>) est négative.

5. Procédé selon l'une quelconque des revendications précédentes,
    **caractérisé en ce que**
    le seuil (thr) est élargi pendant la procédure de régulation anti-patinage.

6. Procédé selon l'une quelconque des revendications précédentes,
    **caractérisé en ce qu'**
    un décalage (Δ$_{thr}$) est ajouté au seuil (thr) pendant la procédure de régulation anti-patinage.

7. Procédé selon la revendication 6,
    **caractérisé en ce que**

le décalage ($\Delta_{thr}$) est calculé au moyen

(a) de l'inversion de la valeur négative de la dérivation temporelle de la vitesse de la roue en cours de patinage ($v_w$, 20, 30), et
(b) de la multiplication du résultat obtenu par un facteur prédéfini ($F_{vw}$).

8. Procédé selon l'une quelconque des revendications 6 et 7,
**caractérisé en ce que**
le décalage ($\Delta_{thr}$) est calculé au moyen de

(a) l'inversion de la valeur négative de la dérivation temporelle du régime du moteur (N), et
(b) de la multiplication du résultat obtenu par un facteur prédéfini ($F_N$).

9. Procédé selon l'une quelconque des revendications 6 à 8,
**caractérisé en ce que**
le décalage ($\Delta_{thr}$) est calculé au moyen

(a) de l'inversion de la valeur négative de la dérivation temporelle de la vitesse moyenne des roues motrices ($<v_{dr}>$), et
(b) de la multiplication du résultat obtenu par un facteur prédéfini ($F<v_{dr}>$).

10. Procédé selon l'une quelconque des revendications 6 à 9,
**caractérisé en ce que**
le décalage ($\Delta_{thr}$) est limité par une valeur maximum prédéfinie et/ou une valeur minimum prédéfinie ($thr_{max}$).

11. Appareil de régulation anti-patinage (ASR) d'un véhicule, remplissant notamment les conditions pour être utilisé avec le procédé selon l'une quelconque des revendications précédentes, selon lequel

(a) une régulation anti-patinage peut être exécutée par des moyens de régulation (90, 10) quand un seuil (thr) pour le patinage ($\lambda$) d'une roue (20, 30) est dépassé, et
(b) le seuil (thr) peut être changé par des moyens de modification (90) pendant la procédure de régulation d'anti-patinage,
**caractérisé en ce que**
l'appareil est configuré pour
(c) déterminer le régime du moteur (N), la vitesse de la roue en cours de patinage (vw) et/ou la vitesse moyenne des roues motrices ($<v_{dr}>$, 20, 30) par des moyens de détermination (25, 35, 90, 280), et
(d) pour exécuter la modification du seuil (thr) pendant la procédure d'anti-patinage par les moyens de modification (90) quand le régime du moteur (N), la vitesse de la roue en cours de patinage (vw) et/ou la vitesse moyenne des roues motrices ($<v_{dr}>$) diminuent.

# FIG. 1

# FIG. 2

# FIG. 3